# EUROPEAN PATENT SPECIFICATION

(11) **EP 2 641 657 B1**
(45) Date of publication and mention of the grant of the patent: **12.10.2016**
(21) Application number: 12160023.3
(22) Date of filing: 19.03.2012
(51) Int. Cl.: B02C 2/04

(54) **Gyratory crusher bearing**
Kreiselbrecherlager
Palier de concasseur giratoire

(43) Date of publication of application: 25.09.2013
(73) Proprietor: Sandvik Intellectual Property AB, 811 81 Sandviken (SE)
(72) Inventor: Behrens, Jonas, 26575 Hyllinge (SE); Bengtsson, Andreas, 21741 Malmö (SE)

(56) References cited:
- SU-A1- 1 761 261
- US-A- 2 000 385
- US-A- 4 681 269
- US-A- 4 787 563

## Description

### Technical field of the invention

The present invention relates to a gyratory crusher bearing for use in a gyratory crusher which comprises a crushing head fixably attached to an upper portion of a main shaft, the bearing configured to support rotational movement of the crushing head about a longitudinal axis.

### Background of the invention

Gyratory crushers are used for crushing ore, mineral and rock material to smaller sizes. Typically, the crusher comprises a crushing head mounted upon an elongate main shaft. A first crushing shell is mounted on the crushing head and a second crushing shell is mounted on a frame such that the first and second crushing shells define together a crushing gap through which the material to be crushed is passed. A driving device is arranged to rotate an eccentric assembly arranged about the lower portion of the shaft so as to cause the crushing head to perform a gyratory pendulum movement and crush the material introduced in the crushing gap.

US 2009/0008489 discloses a hydraulically adjustable cone crusher in which the axial bearing assembly comprises a hydraulic adjustment cylinder for adjusting the setting of the crusher. US 4,919,349 discloses a gyratory crusher having a dual seal arrangement that utilises forced air and a gasket arrangement to block contaminants entering the crusher. SU 897280 describes a cone crusher that has a step cup bearing to absorb and transmit the crushing force of the crusher head.

Presently, to prevent induced rotation of the bearing relative to the bearing support by the gyratory pendulum movement of the crusher head, keys and keyways in the support are provided in an attempt to positionally lock the bearing. However, these keyways create stress concentrations in the assembly that, over time, reduce the longevity of the bearing that ultimately leads to component failure and the need for premature replacement.

SU 1761261 discloses a spherical support bearing for a gyratory crusher that comprises a graphite lining that is mounted upon a polyamide base to define a composite bearing assembly. The positional locking of the two components is provided by a dovetail joint extending radially outward between the components.

US 4,681,269 discloses a gyratory crusher. A spherical gyratory crusher bearing is mounted on top of a socket to support a crushing head.

However, there is a need for an improved bearing for a gyratory crusher that is capable of being secured to a bearing support without creating stress concentrations at the bearing and the support during use.

### Summary of the invention

It is an object of the present invention to provide a gyratory crusher bearing that, when mounted to a bearing support is prevented from rotation about its longitudinal axis without introducing high stress concentrations in the support and in the bearing.

The object is achieved by providing an anchorage region at the bearing that is configured to positionally lock the bearing at its support to prevent its axial rotation about a central longitudinal axis. Importantly, any stress concentrations created between the bearing and the support are minimised due to the present configuration of the anchorage region. In particular, the anchorage region is formed by an outer facing mounting surface of the bearing that, in combination with a bearing surface defines a bearing wall. Accordingly, torque transmitted to the bearing from the rotating crusher head is absorbed and transmitted through the bearing wall and the bearing support. Accordingly, as the anchorage region is provided by the bearing wall via the mounting surface, the requirement for any tangentially or radially orientated keys, keyways or locking flanges is obviated together with the creation of any unwanted stress concentrations.

According to a first aspect of the present invention there is provided a gyratory crusher bearing comprising: a bearing surface to support rotational movement of a crushing head; a mounting surface for positioning against a bearing support; a bearing wall defined between the mounting surface and the bearing surface, the bearing surface defining a central bore extending between a first edge end and a second edge end of the wall; the bearing characterised by: at least one region of the mounting surface that in combination with the bearing surface defines the wall between the first edge end and the second edge end comprises a shape profile at a cross section of the bearing perpendicular to a longitudinal axis of the bearing that is non-circular to define an anchorage region to inhibit rotation of the bearing about the longitudinal axis relative to the bearing support; and the wall at the anchorage region is devoid of radially orientated keys, keyways or locking flanges that would otherwise provide a positional lock of the bearing at the bearing support and create stress concentrations at the wall in use.

Optionally, the bearing surface towards the first edge end is concave relative to the longitudinal axis to support the crushing head, and wherein the bearing surface towards the second edge end is adapted for being positioned adjacent a main shaft upon which the crushing head is mounted. Optionally, a thickness of the wall of the bearing in a radial direction relative to the longitudinal axis at the anchorage region is non-uniform.

Preferably, the anchorage region is positioned towards the second edge end and comprises two diametrically opposed regions at which the mounting surface is substantially planar. Preferably, the substantially planar surfaces at the diametrically opposed regions extend substantially parallel to the longitudinal axis over a region of the length of the bearing between the first and second edge ends.

Preferably, the cross sectional shape profile of the mounting surface at the anchorage region that extends around the longitudinal axis comprises anyone of the following: oval; elliptical; polygonal.

Optionally, the bearing comprises anyone of the following set of: a metal; a metal alloy; a ceramic; a polymer.

Optionally, a shape profile of the bearing surface at a cross section of the bearing perpendicular to the longitudinal axis of the bearing is substantially circular; and the mounting surface is orientated to be outward facing relative to the longitudinal axis.

Optionally, the substantially circular shape profile of the bearing surface around the longitudinal axis extends substantially the entire length of the bearing between the first and second edge ends.

Preferably, a diameter of the substantially circular shape of the bearing surface is variable between the first and second edge ends in the longitudinal direction.

Preferably, the anchorage region extends from the second edge end along a region of the length of the bearing towards the first edge end.

According to a second aspect of the present invention there is provided a gyratory crusher bearing assembly comprising: a bearing as described herein; a bearing support for positionally supporting the bearing, the bearing support having a support surface mated against and around the mounting surface of the bearing; wherein a shape profile of at least one region of the support surface that extends around the mounting surface of the bearing at a cross section of the bearing support perpendicular to the longitudinal axis is non-circular to mate against the non-circular region of the bearing; and wherein the bearing support is devoid of radially orientated keys, keyways or locking flanges that would otherwise provide a positional lock of the bearing at the bearing support and create stress concentrations in the bearing support in use.

Preferably, a shape profile of the support surface at the non-circular region of the bearing support is substantially identical to a shape profile of the mounting surface of the bearing at the non-circular region of the bearing.

Preferably, the bearing support comprises anyone of the following set of:
- a metal
- a metal alloy
- a ceramic
- a polymer

According to a second aspect of the present invention there is provided a gyratory crusher comprising a bearing or a bearing assembly as described herein.

### Brief description of the drawings

The present invention will now be described, by way of example only, and with reference to the accompanying drawings in which:
Figure 1 is a cross sectional side view of a gyratory crusher in which a crushing head is mounted upon a bearing assembly according to a specific implementation of the present invention;
Figure 2 is a cross sectional side view of the bearing assembly illustrated in Figure 1 formed from a bearing fully mated within a bearing support according to a specific implementation of the present invention;
Figure 3 is an underside view of the bearing assembly of Figure 2;
Figure 4 is a lower perspective exploded view of the bearing assembly of Figure 3;
Figure 5 is an upper perspective exploded view of the bearing assembly of Figure 4;
Figure 6 is an upper perspective view of the bearing assembly of Figure 5 with the bearing mated against the bearing support.

### Detailed description of one embodiment

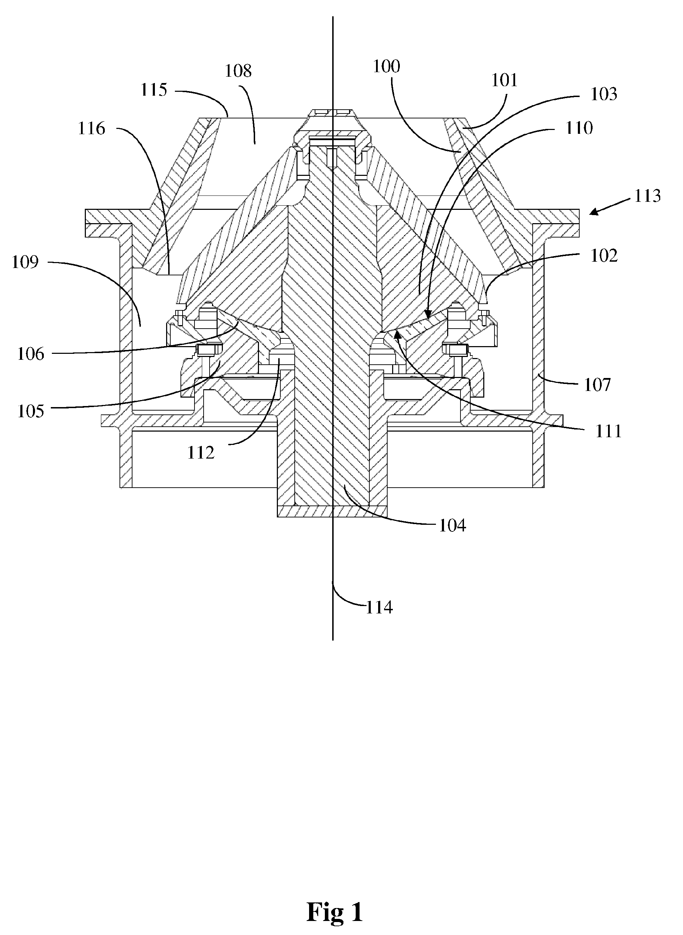

Referring to Figure 1, the gyratory crusher comprises a frame 113 having an upper frame part 101 and a lower frame part 107. A crushing head 103 is mounted upon an elongate main shaft 104. A first crushing shell 102 is fixably mounted on crushing head 103 and a second crushing shell 100 is fixably mounted at top frame part 101. A crushing zone 108 is formed between the opposed crushing shells 102, 100. A discharge zone 109 is positioned immediately below crushing zone 108 and is defined, in part, by lower frame part 107.

Relative to a longitudinal axis 114 extending through the crusher, the crushing head 103 and the main shaft 104, a diameter of a cross section of crushing zone 108 increases in the axial downward direction from an upper input end 115 to a lower discharge end 116. Accordingly, a spatial gap between the opposed crushing shells 102, 100 decreases in the axial downward direction from input end 115 to discharge end 116. As will be appreciated, the upper frame part 101 and lower frame part 107 surround the crushing head 103 and main shaft 104.

A drive motor (not shown) is coupled to main shaft 104 and via suitable gear mechanisms and drive shafts (not shown) positioned between the drive motor and main shaft 104. Accordingly, crushing head 103 and main shaft 104 are configured to rotate according to an eccentric rotational motion about the longitudinal axis 114. The spatial gap between the opposed crushing shells 102, 100 is thereby increased and decreased to crush the material introduced at input end 115, with crushed material being discharged into discharge zone 109 via discharge end 116.

The eccentric rotational motion of crushing head 103 is supported by a composite bearing assembly having bearing 106 positionally retained by a bearing support 105. Bearing 106 comprises a generally longitudinal annular configuration orientated around longitudinal axis 114. Bearing support 105 is also substantially and generally annular around longitudinal axis 114 and also has a length extending in a direction along axis 114 being approximately equal to a corresponding length of bearing 106.

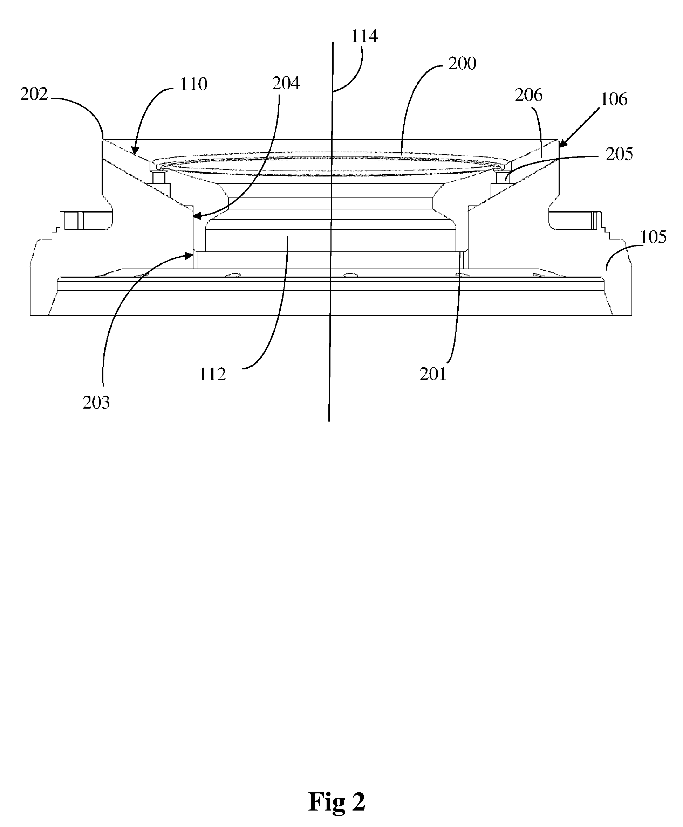

Bearing 106 comprises a bearing surface 110 configured to support crushing head 103 via mating contact with an opposed bearing surface 111 of crushing head 103. Bearing 106 has an internal bore 112 which is concentrically aligned with an internal bore 403 of bearing support 105. Accordingly, the longitudinal axis 114 passes centrally through the aligned internal bores 112, 403 when the bearing 106 and the support 105 are mounted together as a unitary assembly as shown in Figure 2. The internal bores 112, 403 of the annular assembly 106, 105 surround a region of main shaft 104 and crushing head 103. As a diameter of bores 112, 403 is greater than a diameter of elongate shaft 104 and a lower region of crushing head 103, the crushing head 103 and main shaft 104 are capable of the eccentric rotational movement about longitudinal axis 114 whilst being supported and mounted by the bearing assembly 106, 105.

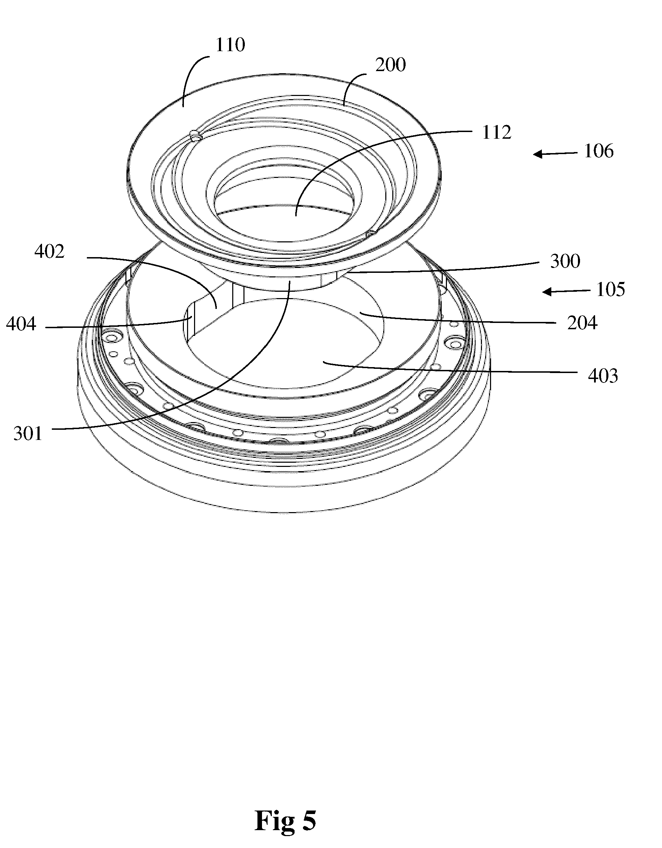

Further details of the bearing assembly will now be described with reference to Figures 2 to 6. Relative to the axis 114, bearing 106 may be considered to comprise an upper region 400 and a lower region 401. Upper region 400 is designed for directly supporting crushing head 103 whilst lower region 401 is generally intended for positioning adjacent and around main shaft 104. Accordingly, bearing 106 comprises a first upper end 202 and a second lower end 201. Relative to the longitudinal axis 114, upper region 400 comprises a greater width or diameter than lower region 401. Bearing surface 110 comprises a substantially circular cross sectional profile relative to axis 114 and extends from first end 202 to second end 201 in a orientation positioned to be general facing axis 114. An opposed mounting surface 203 also extends from first end 202 to second end 201 and is orientated generally to be outwardly facing relative to axis 114. A bearing wall 206 is thereby defined between the inner facing bearing surface 110 and the outer facing mounting surface 203 and extends from upper end 202 to lower end 201. The internal and external width (diameter) of bearing 106 and in particular bearing wall 206 is variable along the length of bearing 106 in the axial direction 114. In addition, a thickness of bearing wall 206 from upper end 202 to lower end 201 is also variable and is generally thicker at upper region 400 towards end 202 than lower region 401 towards end 201.

A series of grooves 200 are indented at bearing surface 110 at upper region 400, where the surface 110 is substantially concave or dish-shaped relative to axis 114, to provide channels for a hydraulic lubricating oil supplied to surface 110 via a conduit network 205.

Bearing support 105 is shaped and dimensioned to be positioned to surround bearing 106 in mating contact. Bearing support 105 comprises a generally inward facing support surface 204 orientated to be facing towards axis 114 and outward facing mounting surface 203 of bearing 206. Bearing support 105 functions to both receive and transmit the loading forces imparted by crushing head 203 and also to positionally lock and anchor bearing 106 relative to longitudinal axis 114 as crushing head 103 and main shaft 104 rotate eccentrically about axis 114. Positional locking of bearing 106 at bearing support 105 is provided by an anchorage region. The anchorage region is formed by a first part (of bearing 106) and a second part (of bearing support 105) that, when mated together, provide a unitary lock arrangement to inhibit and prevent any rotational motion of bearing 106 about axis 114 relative to bearing support 105.

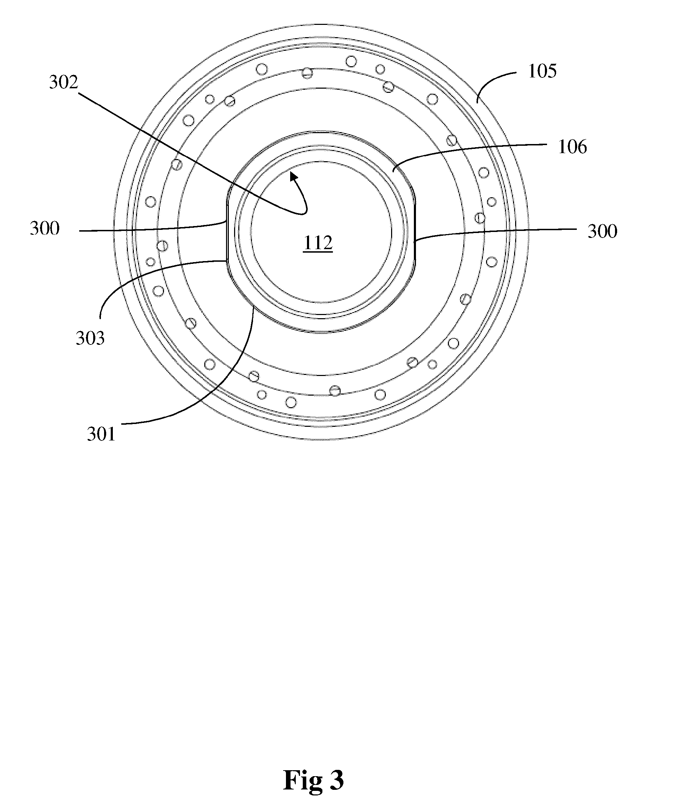

According to the preferred embodiment, the anchorage region is formed at lower region 401 towards lower end 201. The lock mechanism is formed by corresponding non-circular cross sectional shape profiles of bearing 106 and bearing support 105, the cross sectional being aligned perpendicular to the longitudinal axis 114. This non-circular cross sectional profile, referring to Figures 3 to 5, is formed by two diametrically opposed substantially planar surfaces 300 of bearing 106 and corresponding substantially planar surfaces 402 of bearing support 105. When viewed from below as shown in Figure 3, surfaces 300 define cords that bisect the otherwise circular shape profile 301 of the outward facing mounting surface 203 of bearing 106. Each diametrically opposed planar surface 300 extends from bottom end 201 a distance along the length of bearing 106 in the axial direction 114. According to the preferred embodiment, a length of each cord surface 300 referring to the under side view of Figure 3, is approximately a third of the diameter of internal bore 112 at lower region 401 as defined by the inward facing bearing surface 110.

The substantially planar surfaces 402 of bearing support 105 are also positioned diametrically opposed one another and extend over a region of the support surface 204. A shape profile of support surface 204 at a cross section of bearing support 105, perpendicular to longitudinal axis 114, is generally circular except for the diametrically opposed planar surfaces 402 that, in combination, provide a non-circular cross sectional profile. The profile of support surface 204 and mounting surface 203 correspond in shape and approximate dimensions at the anchorage region 401. In particular, the approximate surface area of the opposed planar surfaces 300, 402 are substantially the same such that the opposed surfaces 300, 402 mate against one another in touching or near-touching contact and in parallel alignment with longitudinal axis 114.

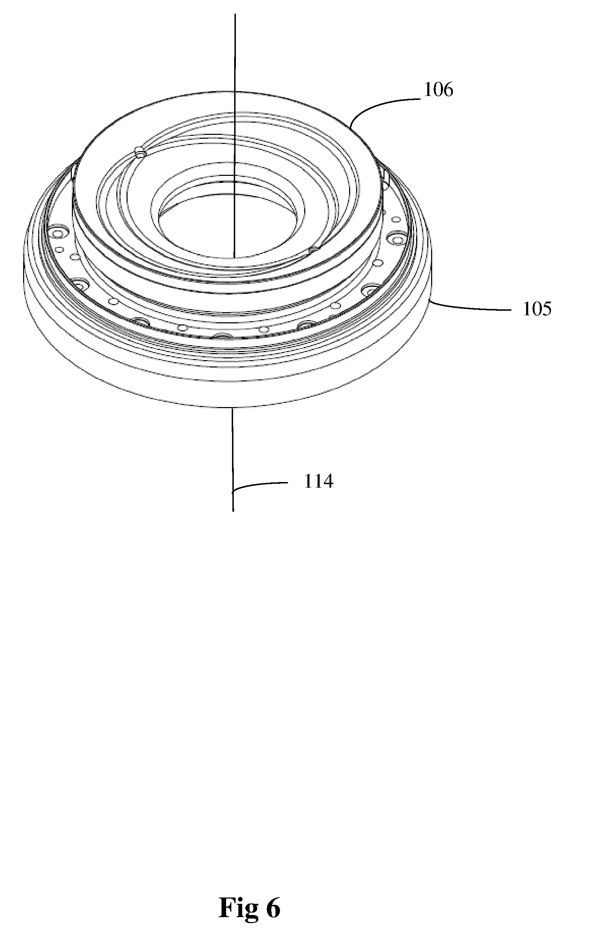

A width or diameter of support surface 204 (that encompasses planar surfaces 402) is slightly greater than the corresponding width or diameter of mounting surface 203 (that encompasses planar surfaces 300) such that bearing 106 is capable of mounting within bearing support 105 as shown in Figures 2 and 6, with Figures 2 and 6 illustrating the almost entire encapsulation of bearing 106 by bearing support 105.

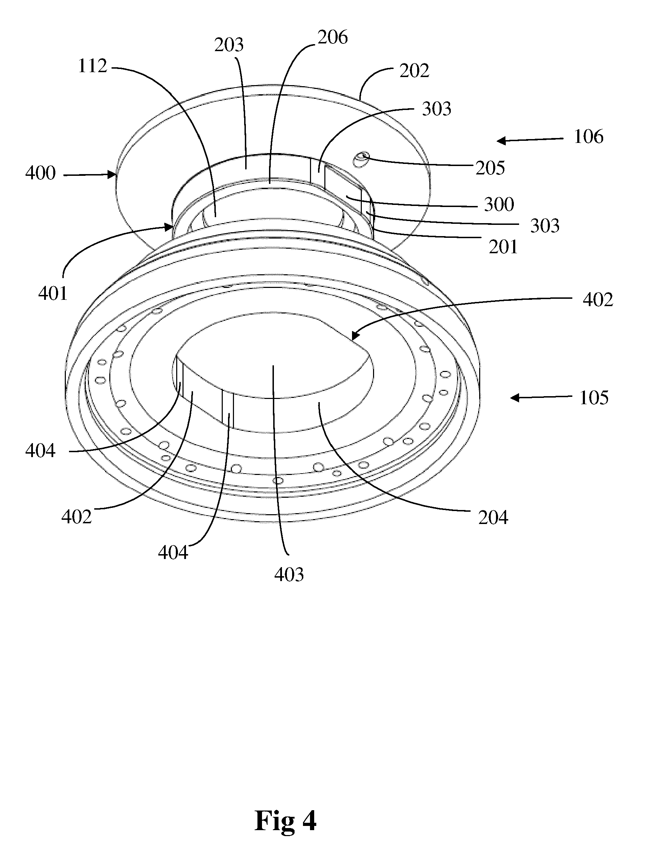

In use, the eccentric rotational motion of crushing head 103 is supported directly upon bearing surface 110. As will be appreciated, a significant torque is transmitted to bearing 106 which would otherwise cause bearing 106 to rotate relative to support 105. This rotational motion of bearing 106 is inhibited by the non-circular shape profile at the anchorage region encompassing the opposed planar surfaces 300, 402. Referring to Figures 3 and 4, each planar surface 300 and 402 is bordered by a pair of respective shoulders 303, 404 that extend in the axial direction 114 at the junction with the respective curved surfaces 301, 204 at the anchorage region. Rotational progression of bearing 106 about axis 114 is prevented as the opposed pairs of shoulders 303, 404 abut one another in touching contact.

According to further embodiments, bearing 106 and bearing support 105, each respectively comprise a single substantially planar surface 300, 402 extending respectively over a region of mounting surface 203 and support surface 204. However, according to the preferred embodiment, the bearing 106 and bearing support 105 each comprise respectively, a plurality of planar surfaces 300, 402 that intersect the otherwise circular cross sectional profiles 301, 204 relative to axis 114.

According to further specific embodiments, a shape profile at a cross section of the bearing 106 and the bearing support 105, perpendicular to longitudinal axis 114, is oval, elliptical or polygonal.

## Claims

1. A gyratory crusher bearing (106) comprising:
a bearing surface (110) to support rotational movement of a crushing head (103);
a mounting surface (203) for positioning against a bearing support (105);
a bearing wall (206) defined between the mounting surface (203) and the bearing surface (110), the bearing surface (110) defining a central bore (112) extending between a first edge end (202) and a second edge end (201) of the wall (206);
at least one region of the mounting surface (203) that in combination with the bearing surface (110) defines the wall (206) between the first edge end (202) and the second edge end (201) comprises a shape profile at a cross section of the bearing (106) perpendicular to a longitudinal axis (114) of the bearing that is non-circular to define an anchorage region (300) to inhibit rotation of the bearing (106) about the longitudinal axis (114) relative to the bearing support (105); the bearing (106) **characterised in that**:
the wall (206) at the anchorage region is devoid of radially orientated keys, keyways or locking flanges that would otherwise provide a positional lock of the bearing (106) at the bearing support (105) and create stress concentrations at the wall (206) in use.

2. The bearing as claimed in claim 1 wherein the bearing surface (110) towards the first edge end (202) is concave relative to the longitudinal axis (114) to support the crushing head (103), and wherein the bearing surface (110) towards the second edge end (201) is adapted for being positioned adjacent a main shaft (104) upon which the crushing head (103) is mounted.

3. The bearing as claimed in any preceding claim wherein a thickness of the wall (206) of the bearing (106) in a radial direction relative to the longitudinal axis (114) at the anchorage region is non-uniform.

4. The bearing as claimed in claim 3 wherein the anchorage region is positioned towards the second edge end (201) and comprises two diametrically opposed regions (300) at which the mounting surface (203) is substantially planar.

5. The bearing as claimed in claim 4 wherein the substantially planar surfaces at the diametrically opposed regions (300) extend substantially parallel to the longitudinal axis (114) over a region of the length of the bearing (106) between the first (202) and second ends (201).

6. The bearing as claimed in any preceding claim wherein the cross sectional shape profile of the mounting surface (203) at the anchorage region that extends around the longitudinal axis (114) comprises anyone of the following:
• oval
• elliptical
• polygonal.

7. The bearing as claimed in any preceding claim wherein the bearing (106) comprises anyone of the following set of:
• a metal
• a metal alloy
• a ceramic
• a polymer.

8. The bearing as claimed in any preceding claim wherein:
a shape profile of the bearing surface (110) at a cross section of the bearing (106) perpendicular to the longitudinal axis (114) is substantially circular; and
the mounting surface (203) is orientated to be outward facing relative to the longitudinal axis (114).

9. The bearing as claimed in claim 8 wherein the substantially circular shape profile of the bearing surface (110) around the longitudinal axis (114) extends substantially the entire length of the bearing (106) between the first (202) and second (201) ends.

10. The bearing as claimed in claim 9 wherein a diameter of the substantially circular shape of the bearing surface (110) is variable between the first (202) and second (201) ends in the longitudinal direction.

11. The bearing as claimed in claims 9 or 10 wherein the anchorage region extends from the second end (201) along a region of the length of the bearing (106) towards the first end (202).

12. A gyratory crusher bearing assembly comprising:
a bearing (106) according to anyone of claims 1 to 11;
a bearing support (105) for positionally supporting the bearing (106), the bearing support (105) having a support surface (204) mated against and around the mounting surface (203) of the bearing (106);
wherein a shape profile of at least one region of the support surface (204) that extends around the mounting surface (203) of the bearing at a cross section of the bearing support (205) perpendicular to the longitudinal axis (114) is non-circular to mate against the non-circular region of the bearing (106); and
wherein the bearing support (105) is devoid of radially orientated keys, keyways or locking flanges that would otherwise provide a positional lock of the bearing (106) at the bearing support (105) and create stress concentrations in the bearing support (105) in use.

13. The assembly as claimed in claim 12 wherein a shape profile of the support surface (204) at the non-circular region of the bearing support (105) is substantially identical to a shape profile of the mounting surface (203) of the bearing (106) at the non-circular region of the bearing (106).

14. The assembly as claimed in claims 12 or 13 wherein the bearing support (105) comprises anyone of the following set of:
• a metal
• a metal alloy
• a ceramic
• a polymer.

15. A gyratory crusher comprising a bearing (106) according to any one of claims 1 to 11 or a bearing assembly according to any one of claims 12 to 14.

## Patentansprüche

1. Lager (106) für einen Kreiselbrecher, welches aufweist:
eine Lagerfläche (110) zum Unterstützen einer Drehbewegung eines Brechkopfes (103),
eine Montagefläche (203) für die Anordnung an einer Lagerhalterung (105),
wobei eine Lagerwand (206) zwischen der Montagefläche (203) und der Lagerfläche (110) definiert ist, wobei die Lagerfläche (110) eine zentrale Bohrung (112) definiert, die sich zwischen dem Ende (202) einer ersten Kante und dem Ende (201) einer zweiten Kante der Wand (206) erstreckt,
wobei zumindest ein Bereich der Montagefläche (203), welche in Kombination mit der Lagerfläche (110) die Wand (206) zwischen dem Ende (202) der ersten Kante und dem Ende (201) der zweiten Kante definiert, eine Profilform mit einem Querschnitt des Lagers (106) senkrecht zu einer Längsachse (114) des Lagers aufweist, der nicht kreisförmig ist, um einen Verankerungsbereich (300) zu definieren,
um eine Drehung des Lagers (106) um die Längsachse (114) relativ zu der Lagerhalterung (105) zu verhindern, wobei das Lager (106) **dadurch gekennzeichnet ist, dass**
die Wand (206) und der Verankerungsbereich frei von radial ausgerichteten Keilen, Nuten oder Verriegelungsflanschen ist, welche anderenfalls eine Verriegelung der Position des Lagers (106) und der Lagerhalterung (105) bewirken und im Gebrauch Spannungskonzentrationen an der Wand (206) hervorrufen würden.

2. Lager nach Anspruch 1, wobei die Lagerfläche (110) relativ zu der Längsachse (114) in Richtung des Endes (202) der ersten Kante konkav ist, um den Brechkopf (103) zu haltern und wobei die Lagerfläche (110) in Richtung des Endes (201) der zweiten Kante dafür ausgelegt ist, an einer Hauptwelle (104) angeordnet zu werden, auf welcher der Brechkopf (103) montiert ist.

3. Lager nach einem der vorstehenden Ansprüche, wobei eine Wandstärke (206) des Lagers (106) in radialer Richtung relativ zu der Längsachse (114) in dem Ankerbereich nicht gleichförmig ist.

4. Lager nach Anspruch 3, wobei der Ankerbereich in Richtung des Endes (201) der zweiten Kante positioniert ist und zwei diametral gegenüberliegende Bereiche (300) aufweist, an welchen die Montagefläche (203) im Wesentlichen eben ist.

5. Lager nach Anspruch 4, wobei die im Wesentlichen ebenen Flächen an diametral gegenüberliegenden Bereichen (300) sich über einen Abschnitt der Länge des Lagers (106) zwischen den ersten (202) und den zweiten Enden (201) im Wesentlichen parallel zu der Längsachse (114) erstrecken.

6. Lager nach einem der vorstehenden Ansprüche, wobei die Profilform des Querschnitts der Montagefläche (203) an dem Verankerungsbereich, der sich um die Längsachse (114) erstreckt, eine der folgenden aufweist:
• oval,
• elliptisch,
• polygonal.

7. Lager nach einem der vorstehenden Ansprüche, wobei das Lager (106) irgendeines aus dem folgenden Satz aufweist:
• ein Metall,
• eine Metalllegierung,
• eine Keramik,
• ein Polymer.

8. Lager nach einem der vorstehenden Ansprüche, wobei
eine Profilform der Lagerfläche (110) bei einem Querschnitt des Lagers (106) senkrecht zur Längsachse (114) im Wesentlichen kreisförmig ist und
die Montagefläche (203) relativ zu der Längsachse (114) nach außen hin weisend orientiert ist.

9. Lager nach Anspruch 8, wobei die im Wesentlichen kreisförmige Profilform der Lagerfläche (110) um die Längsachse (114) sich im Wesentlichen über die gesamte Länge des Lagers (106) zwischen dem ersten (202) und dem zweiten Ende (201) erstreckt.

10. Lager nach Anspruch 9, wobei ein Durchmesser der im Wesentlichen kreisförmigen Form der Lagerfläche (110) zwischen dem ersten (202) und zweiten Ende (201) in Längsrichtung variabel ist.

11. Lager nach Anspruch 9 oder 10, wobei der Verankerungsbereich sich von dem zweiten Ende (201) entlang eines Abschnittes der Länge des Lagers (106) in Richtung des ersten Endes (202) erstreckt.

12. Lageraufbau eines Kreiselbrechers, welcher aufweist:
ein Lager (106) nach einem der Ansprüche 1 bis 11,
eine Lagerhalterung (105), um das Lager (106) in seiner Position zu haltern, wobei die Lagerhalterung (105) eine Halterungsfläche (204) hat, die zu der Montagefläche (203) des Lagers (106) passt und um diese herum angeordnet ist,
wobei eine Profilform zumindest eines Bereiches der Halterungsfläche (204), die sich bei einem Querschnitt der Lagerhalterung (205) senkrecht zu der Längsachse (114) um die Montagefläche (203) des Lagers herum erstreckt, nicht kreisförmig ist, um sich dem nicht kreisförmigen Bereich des Lagers (106) anzupassen, und
wobei die Lagerhalterung (105) frei von in radialer Richtung ausgerichteten Keilen, Nuten oder Verriegelungsflanschen ist, welche anderenfalls eine Verriegelung der Position des Lagers (106) an der Lagerhalterung (105) bereitstellen und im Gebrauch in der Lagerhalterung (105) Spannungskonzentrationen hervorrufen.

13. Aufbau nach Anspruch 12, wobei eine Profilform der Halterungsfläche (204) in dem nicht kreisförmigen Bereich der Lagerhalterung (105) im Wesentlichen identisch mit der Profilform an der Montagefläche (203) des Lagers (106) in dem nicht kreisförmigen Bereich des Lagers (106) ist.

14. Aufbau nach den Ansprüchen 12 oder 13, wobei die Lagerhalterung (105) irgendeinen aus dem folgenden Satz aufweist:
• ein Metall,
• eine Metalllegierung,
• eine Keramik,
• ein Polymer.

15. Kreiselbrecher, welche ein Lager (106) nach einem der Ansprüche 1 bis 11 oder einen Lageraufbau nach einem der Ansprüche1 12 bis 14 aufweist.

## Revendications

1. Palier de concasseur giratoire (106) comprenant :
une surface de palier (110) pour supporter un mouvement de rotation d'une tête de concassage (103) ;
une surface de montage (203) pour un positionnement contre un support de palier (105) ;
une paroi de palier (206) définie entre la surface de montage (203) et la surface de palier (110), la surface de palier (110) définissant un alésage central (112) s'étendant entre une première extrémité de bord (202) et une deuxième extrémité de bord (201) de la paroi (206) ;
au moins une région de la surface de montage (203) qui en combinaison avec la surface de palier (110) définit la paroi (206) entre la première extrémité de bord (202) et la deuxième extrémité de bord (201) comprend un profil de forme au niveau d'une section transversale du palier (106) perpendiculaire à un axe longitudinal (114) du palier qui est non circulaire pour définir une région d'ancrage (300) pour empêcher une rotation du palier (106) autour de l'axe longitudinal (114) par rapport au support de palier (105) ;
le palier (106) étant **caractérisé en ce que** :
la paroi (206) au niveau de la région d'ancrage est dépourvue de clavettes orientées radialement, de rainures de clavettes ou de brides de verrouillage qui sinon permettraient un verrouillage en position du palier (106) au niveau du support de palier (105) et créeraient des concentrations de contraintes au niveau de la paroi (206) en utilisation.

2. Palier selon la revendication 1 dans lequel la surface de palier (110) en direction de la première extrémité de bord (202) est concave par rapport à l'axe longitudinal (114) pour supporter la tête de concassage (103), et dans lequel la surface de palier (110) en direction de la deuxième extrémité de bord (201) est destinée à être positionnée à une position adjacente à un arbre principal (104) sur lequel la tête de concassage (103) est montée.

3. Palier selon l'une quelconque des revendications précédentes dans lequel une épaisseur de la paroi (206) du palier (106) dans une direction radiale par rapport à l'axe longitudinal (114) au niveau de la région d'ancrage est non uniforme.

4. Palier selon la revendication 3 dans lequel la région d'ancrage est positionnée en direction de la deuxième extrémité de bord (201) et comprend deux régions diamétralement opposées (300) au niveau desquelles la surface de montage (203) est substantiellement plane.

5. Palier selon la revendication 4 dans lequel les surfaces substantiellement planes au niveau des régions diamétralement opposées (300) s'étendent substantiellement parallèlement à l'axe longitudinal (114) sur une région de la longueur du palier (106) entre les première (202) et deuxième (201) extrémités.

6. Palier selon l'une quelconque des revendications précédentes dans lequel le profil de forme de section transversale de la surface de montage (203) au niveau de la région d'ancrage qui s'étend autour de l'axe longitudinal (114) comprend l'une quelconque des formes suivantes :
• une forme ovale
• une forme elliptique
• une forme polygonale.

7. Palier selon l'une quelconque des revendications précédentes dans lequel le palier (106) comprend l'un quelconque de l'ensemble suivant :
• un métal
• un alliage métallique
• une céramique
• un polymère.

8. Palier selon l'une quelconque des revendications précédentes dans lequel :
un profil de forme de la surface de palier (110) au niveau d'une section transversale du palier (106) perpendiculaire à l'axe longitudinal (114) est substantiellement circulaire ; et
la surface de montage (203) est orientée pour être tournée vers l'extérieur par rapport à l'axe longitudinal (114).

9. Palier selon la revendication 8 dans lequel le profil de forme substantiellement circulaire de la surface de palier (110) autour de l'axe longitudinal (114) s'étend substantiellement sur la longueur entière du palier (106) entre les première (202) et deuxième (201) extrémités.

10. Palier selon la revendication 9 dans lequel un diamètre de la forme substantiellement circulaire de la surface de palier (110) est variable entre les première (202) et deuxième (201) extrémités dans la direction longitudinale.

11. Palier selon les revendications 9 ou 10 dans lequel la région d'ancrage s'étend à partir de la première extrémité (201) le long d'une région de la longueur du palier (106) en direction de la première extrémité (202).

12. Ensemble de palier de concasseur giratoire comprenant :
un palier (106) selon l'une quelconque des revendications 1 à 11 ;
un support de palier (105) pour supporter en position le palier (106), le support de palier (105) ayant une surface de support (204) accouplée contre et autour de la surface de montage (203) du palier (106) ;
dans lequel un profil de forme d'au moins une région de la surface de support (204) qui s'étend autour de la surface de montage (203) du palier au niveau d'une section transversale du support de palier (205) perpendiculaire à l'axe longitudinal (114) est non circulaire pour être accouplé contre la région non circulaire du palier (106) ; et
dans lequel le support de palier (105) est dépourvu de clavettes orientées radialement, de rainures de clavettes ou de brides de verrouillage qui sinon permettraient un verrouillage en position du palier (106) au niveau du support de palier (105) et créeraient des concentrations de contraintes au niveau de la paroi (206) en utilisation.

13. Ensemble selon la revendication 12 dans lequel un profil de forme de la surface de support (204) au niveau de la région non circulaire du support de palier (105) est substantiellement identique à un profil de forme de la surface de montage (203) du palier (106) au niveau de la région non circulaire du palier (106).

14. Ensemble selon les revendications 12 ou 13 dans lequel le support de palier (105) comprend l'un quelconque de l'ensemble suivant :
• un métal
• un alliage métallique
• une céramique
• un polymère.

15. Concasseur giratoire comprenant un palier (106) selon l'une quelconque des revendications 1 à 11 ou un ensemble de palier selon l'une quelconque des revendications 12 à 14.
